(19) Europäisches Patentamt
European Patent Office
Office européen des brevets

(11) **EP 1 491 824 B1**

(12) **EUROPÄISCHE PATENTSCHRIFT**

(45) Veröffentlichungstag und Bekanntmachung des Hinweises auf die Patenterteilung:
**25.01.2017 Patentblatt 2017/04**

(51) Int Cl.:
**F23R 3/40** (2006.01)       **C01B 3/38** (2006.01)
**B01J 19/24** (2006.01)      **F23C 13/00** (2006.01)

(21) Anmeldenummer: **04102899.4**

(22) Anmeldetag: **23.06.2004**

(54) **Katalytischer Reaktor und zugehöriges Betriebsverfahren**

Catalytic reactor and associated operating method

Réacteur catalytique et procédé d'utilisation correspondant

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.06.2003 DE 10329162**

(43) Veröffentlichungstag der Anmeldung:
**29.12.2004 Patentblatt 2004/53**

(73) Patentinhaber: **General Electric Technology GmbH**
**5400 Baden (CH)**

(72) Erfinder:
• **Carroni, Richard, Dr.**
**5443 Niederrohrdorf (CH)**
• **Griffin, Timothy, Dr.**
**5408 Ennetbaden (CH)**
• **Wolf, Markus, Dr.**
**5430 Wettingen (CH)**

(74) Vertreter: **Bernotti, Andrea et al**
**Studio Torta S.p.A.**
**Via Viotti, 9**
**10121 Torino (IT)**

(56) Entgegenhaltungen:
EP-A1- 1 255 078       EP-A2- 1 251 314
EP-A2- 1 255 077       WO-A1-99/55459
WO-A1-2004/020094      DE-C1- 10 027 400

## Beschreibung

### Technisches Gebiet

Die vorliegende Erfindung betrifft einen katalytischen Reaktor zur Erzeugung eines Wasserstoff enthaltenden Synthesegases aus einem fetten Brennstoff-Oxidator-Gemisch. Die Erfindung betrifft außerdem ein Betriebsverfahren für einen derartigen Reaktor sowie eine mit einem solchen Reaktor ausgestattete Brenneranordnung.

### Stand der Technik

Bei einer Brenneranordnung, insbesondere für eine Gasturbine einer Kraftwerksanlage, wie sie beispielsweise aus der EP 1 265 029 A2 bekannt ist, besteht stets das Bedürfnis, eine sich im Betrieb der Brenneranordnung in einer Brennkammer ausbildende Flammenfront zu stabilisieren, um einerseits einen Verbrennungsvorgang mit möglichst niedrigen Schadstoffemissionen zu erzielen und um andererseits ein Erlöschen der Verbrennungsreaktion zu vermeiden. Insbesondere beim Hochfahren der Brenneranordnung oder bei Betriebszuständen mit kleinen Lasten, ist eine stabile Flammenfront aufgrund der niedrigeren Temperaturen von erhöhter Bedeutung.

Aus der US 5,346,389 ist ein Katalysator bekannt, der eine Vielzahl paralleler Kanäle aufweist, wobei katalytisch aktive Kanäle und katalytisch inaktive Kanäle über den gesamten Querschnitt des Katalysators einander abwechselnd angeordnet sind. Hierdurch ist es möglich, die katalytisch aktiven Kanälen durch die Gasströmung in den katalytisch inaktiven Kanälen zu kühlen. In den katalytisch aktiven Kanälen kann dann eine heterogene Verbrennungsreaktion ablaufen, bei der mehr oder weniger Brennstoff eines mageren Brennstoff-Oxidator-Gemischs durch vollständige Oxidation umgesetzt wird. Dieser Katalysator kann einer Brennkammer vorgeschaltet werden, um darin die Temperatur zu erhöhen. Auf diese Weise kann die in der Brennkammer ablaufende homogene Verbrennungsreaktion thermisch stabilisiert werden.

Aus der US 6,358,040 B1 ist eine Katalysatoranordnung bekannt, die von einem fetten Brennstoff-Oxidator-Gemisch durchströmt wird, wobei eine vollständige Oxidation des Brennstoffs durchgeführt wird. Die dabei entstehende Wärme wird direkt an eine Oxidator-Strömung abgegeben, die stromab der Katalysatoranordnung mit den fetten Verbrennungsabgasen vermischt und in einer Brennkammer homogen verbrannt wird. Auch durch diese Maßnahme wird die Temperatur des der Brennkammer zugeführten Brennstoff-Oxidator-Gemischs erhöht, was zu einer thermischen Stabilisierung der Verbrennung in der Brennkammer führt.

Um die Brennkammer auch bei niedriger Last stabil betreiben zu können, ist es außerdem üblich, den Brennstoffanteil im mageren Brennstoff-Oxidator-Gemisch zu erhöhen, um dadurch die Temperatur in der Brennkammer zu erhöhen. Hierdurch kann ein Temperaturniveau gehalten werden, das ausreichend oberhalb einer Löschgrenze liegt, bei der die Flamme in der Brennkammer erlischt. Das in Richtung fett verschobene magere Brennstoff-Oxidator-Gemisch führt jedoch zu einer erhöhten Schadstoffbildung in der Verbrennungsreaktion. Insbesondere erhöht sich die $NO_x$-Emission.

Aus der EP 0 767 345 A1 ist es bekannt, mit Hilfe eines Wasserstoff-Generators aus einem Brennstoff-Oxidator-Gemisch ein Wasserstoff enthaltendes Gas zu erzeugen und dieses einem Brennstoff-Oxidator-Gemisch beizumischen. Durch den Wasserstoff erhöht sich die Reaktivität des Brennstoff-Oxidator-Gemischs, wodurch die Verbrennung in einer katalytischen Brennerstufe verbessert werden kann. Der hierbei verwendete Wasserstoff-Generator fraktioniert den zugehörigen Brennstoff und erzeugt dadurch den Wasserstoff vorzugsweise mit Hilfe eines Katalysators. Der apparative Aufwand ist hierbei relativ groß.

Aus der EP 1 251 314 ist ein katalytischer Brenner bekanntgeworden, bei dem eine Einlasszone mit einer hohen katalytischen Wirkung vorgesehen ist, eine mittlere Zone, die auf minimalen Druckverlust ausgelegt ist, und die in weitere Unterbereiche unterschiedlicher katalytischer Aktivität unterteilt sein kann, wobei sowohl katalytisch aktive wie auch inerte Unterbereiche angeordnet sein können, sowie eine Auslasszone, die katalytisch aktiv oder inaktiv ausgebildet sein kann. Hierbei ist nichts darüber ausgesagt, wie hoch die katalytische Aktivität der Auslasszone im Vergleich zur Einlasszone allenfalls sei.

Aus der EP 1 255 078 ist ein katalytischer Brenner bekanntgeworden, der an seinem Eintrittsbereich eine Anzahl katalytisch beschichteter Kanäle aufweist. Stromab davon wird jeder dieser Kanäle in weitere Kanäle aufgesplittet. Ein Teil dieser weiteren Kanäle ist nicht katalytisch beschichtet, während die anderen der weiteren Kanäle mit einer katalytischen Beschichtung versehen sind..

### Darstellung der Erfindung

Die vorliegende Erfindung, wie sie in den Ansprüchen gekennzeichnet ist, beschäftigt sich mit dem Problem, für die Stabilisierung der Flammenfront in einer Brennkammer einen Weg aufzuzeigen, der insbesondere zum einen preiswert realisierbar ist und zum anderen eine Erhöhung der Schadstoffemissionen vermeidet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, einen katalytischen Reaktor zumindest in einem Kernbereich seines Querschnitts ausschließlich mit katalytisch aktiven Kanälen auszustatten, wobei die Kanäle in einem stromauf liegenden ersten Längsabschnitt des Reaktors einen größeren katalytisch aktiv beschichteten Oberflächenanteil besitzen als in einem stromab nachfolgenden zweiten Längsabschnitt des Reaktors. Ein derartiger Reaktor erzeugt unter den entsprechenden Betriebsbedingungen aus einem zugeführten fetten Brennstoff-Oxidator-Gemisch ein Synthesegas, das einen relativ hohen Anteil an Wasserstoff enthält. Dieses Synthesegas kann in eine Brennkammer eingeleitet werden, um dort die homogene Flammenfront zu stabilisieren. Dabei hat sich gezeigt, dass mit Hilfe des Wasserstoffs die Löschtemperatur der in der Brennkammer ablaufenden Verbrennungsreaktion deutlich abgesenkt werden kann. Hierdurch vergrößert sich die Temperaturdifferenz zwischen der Temperatur in der Brennkammer und der Löschgrenze. Dementsprechend ergibt sich daraus eine chemische Flammenstabilisierung.

Des Weiteren kann die bei der Erzeugung des Wasserstoffs entstehende Wärmeenergie zur Vorwärmung des der Brennkammer zugeführten Brennstoff-Oxidator-Gemischs verwendet werden. Insoweit ermöglicht der erfindungsgemäße Reaktor außerdem eine thermische Flammenstabilisierung.

Da der erfindungsgemäße Reaktor in seinem Kernbereich ausschließlich katalytisch aktive Kanäle enthält, kann die erwünschte katalytische Reaktion entlang eines relativ kurzen Strömungswegs gezündet und mit einer hinreichenden Brennstoff-Umsetzung durchgeführt werden. Hierdurch ergibt sich in der Durchströmungsrichtung eine extrem kompakte Bauweise für den Reaktor, wodurch der Reaktor zum einen preiswert realisierbar ist und zum anderen insbesondere in bestehende, kompakte Anlagen nachträglich eingebaut werden kann.

Die in Strömungsrichtung kurze Bauweise des erfindungsgemäßen Reaktors reduziert außerdem den Durchströmungswiderstand des Reaktors, wodurch ein Druckabfall bei der Durchströmung des Reaktors reduziert werden kann.

Beachtenswert ist hierbei, dass der Reaktor zumindest in seinem zweiten Längsabschnitt als Teiloxidationskatalysator ausgestaltet ist, in dem durch Teiloxidation das darin strömende Brennstoff-Oxidator-Gemisch in das gewünschte Wasserstoff enthaltende Synthesegas umgesetzt wird. Eine vollständige Oxidation, bei der eine heterogene Verbrennung stattfindet, kann im Reaktor, insbesondere im Eintrittsbereich des ersten Längsabschnitts, grundsätzlich vorkommen, tritt jedoch insgesamt gegenüber der Teiloxidation deutlich in den Hintergrund.

Um den Reaktor zu starten, wird diesem ein fettes Brennstoff-Oxidator-Gemisch mit einer ersten Brennstoff-Oxidator-Zahl und bei einer ersten Eintrittstemperatur zugeführt. Die erste Brennstoff-Oxidator-Zahl und die erste Eintrittstemperatur sind dabei so an die katalytische Reaktivität des ersten Längsabschnitts des Reaktors angepasst, dass sich das in den Reaktor einströmende fette Brennstoff-Oxidator-Gemisch selbstständig entzündet. Nach dem Starten des Reaktors wird entsprechend dem erfindungsgemäßen Betriebsverfahren die Eintrittstemperatur abgesenkt und danach die Brennstoff-Oxidator-Zahl erhöht. Durch diese Vorgehensweise wird in vorteilhafter Weise die Erkenntnis ausgenutzt, dass sich nach dem Start des Reaktors die Oberflächentemperatur des Reaktors stark erhöht. Eine erhöhte Oberflächentemperatur führt jedoch dazu, dass mit dem zugeführten Brennstoff-Oxidator-Gemisch die katalytische Reaktion bereits bei niedrigeren Eintrittstemperaturen selbsttätig weiter reagiert. Gleichzeitig ist es bei den höheren Oberflächentemperaturen im Reaktor möglich, die Brennstoff-Oxidator-Zahl des fetten Gemischs in Richtung mager zu verschieben, um ein weniger fettes Gemisch zu erhalten. Die selbsttätig weiterlaufende Reaktion wird dadurch nicht beeinträchtigt, während sich die Wasserstoff-Produktion durch diese Maßnahme erheblich steigern lässt. Dies ist im Hinblick auf die Dauerhaltbarkeit des Reaktorwerkstoffs von Vorteil.

Entsprechend einer besonders vorteilhaften Ausführungsform kann das Erhöhen der Brennstoff-Oxidator-Zahl und/oder das Absenken der Eintrittstemperatur so durchgeführt werden, dass eine Austrittstemperatur des Reaktors im wesentlichen konstant bleibt. Durch diese Maßnahme kann vergleichsweise rasch eine vorbestimmte Austrittstemperatur am Reaktor eingestellt werden; ebenso kann dadurch die Synthesegas-Produktion maximiert werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

**Kurze Beschreibung der Zeichnungen**

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Merkmale bezieht.

Es zeigen, jeweils schematisch

Fig. 1 eine stark vereinfachte dreidimensionale Ansicht auf einen erfindungsgemäßen Reaktor,

Fig. 2 einen Ausschnitt eines Querschnitts in einem ersten Längsabschnitt des Reaktors entsprechend dem Schnitt II in Fig. 1,

Fig. 3 einen Ausschnitt eines Querschnitts durch einen zweiten Längsabschnitt des Reaktors entsprechend dem Schnitt III in Fig. 1,

Fig. 4 einen Ausschnitt eines stark vereinfachten Längsschnitts durch den Reaktor entsprechend den Schnittlinien IV in Fig. 1,

Fig. 5 eine Ansicht wie in Fig. 4, jedoch bei einer anderen Ausführungsform,

Fig. 6     einen Querschnitt durch den Reaktor bei einer anderen Ausführungsform,

Fig. 7     eine Prinzipdarstellung im Längsschnitt durch eine bevorzugte Anwendungsform des Reaktors,

Fig. 8     eine schaltplanartige Prinzipdarstellung einer erfindungsgemäßen Brenneranordnung.

## Wege zur Ausführung der Erfindung

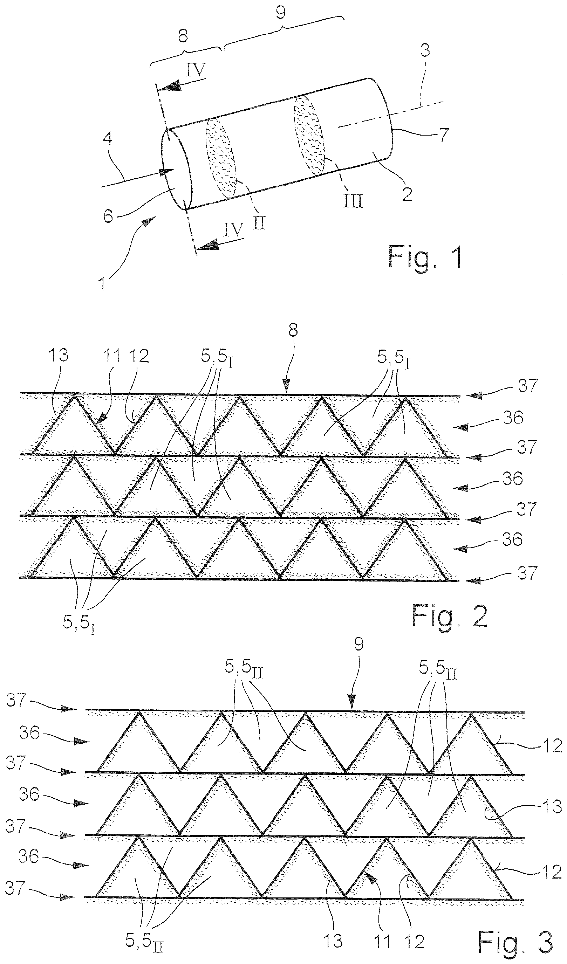

Entsprechend Fig. 1 umfasst ein katalytischer Reaktor 1 nach der Erfindung einen Reaktorkörper 2, der hier eine zylindrische, insbesondere kreiszylindrische, Form besitzt. Grundsätzlich sind auch andere Geometrien möglich. Der Reaktor 1 besitzt eine Längsachse 3, die parallel zu einer durch einen Pfeil 4 symbolisierten Strömung orientiert ist. Der Reaktor 1 enthält eine Vielzahl paralleler Kanäle 5 (vgl. die Fig. 2 bis 6), die parallel zur Längsachse 3 verlaufen und von der Gasströmung 4 durchströmbar sind. Des Weiteren besitzt der Reaktor 1 eine von der Gasströmung 4 angeströmte Eintrittsseite 6, durch die die Gasströmung 4 in den Reaktor 1 bzw. in dessen Kanäle 5 eintritt. Die Gasströmung 4 tritt aus den Kanälen 5 bzw. aus dem Reaktor 1 an einer Austrittsseite 7 wieder aus, die von der Eintrittsseite 6 abgewandt ist. Die Kanäle 5 erstrecken sich dabei von der Eintrittsseite 6 zur Austrittsseite 7.

Erfindungsgemäß ist der Reaktor 1 in seiner Längsrichtung 3 in zwei Längsabschnitte, nämlich in einen stromauf angeordneten ersten Längsabschnitt 8 und einem stromab angeordneten zweiten Längsabschnitt 9, unterteilt. Die im ersten Längsabschnitt 8 verlaufenden Kanäle 5 werden im folgenden als erste Kanäle $5_I$ bezeichnet, während die im zweiten Längsabschnitt 9 angeordneten Kanäle 5 im folgenden als zweite Kanäle $5_{II}$ bezeichnet werden.

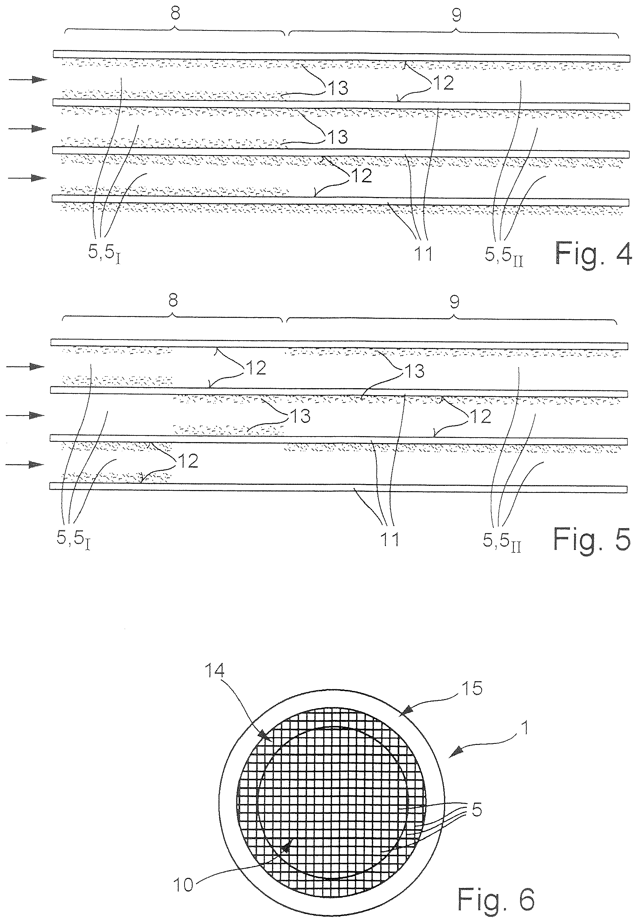

Erfindungsgemäß sind nun zumindest in einem Kernbereich (vgl. Bezugszeichen 10 in Fig. 6) eines Querschnitts des Reaktors 1 sämtliche Kanäle 5 katalytisch aktiv ausgebildet. Dieser Kernbereich 10 erstreckt sich dabei konzentrisch zum Reaktor 1 bzw. konzentrisch zu dessen Längsmittelachse. Bei der in Fig. 1 gezeigten Ausführungsform sind alle Kanäle 5 des Reaktorquerschnitts katalytisch aktiv ausgestaltet, also nicht nur diejenigen des Kernbereichs 10.

Von entscheidender Bedeutung ist dabei, dass die katalytisch aktiven ersten Kanäle $5_I$ des ersten Längsabschnitts 8 einen größeren katalytisch aktiv beschichteten Anteil an der Gasströmung ausgesetzten Oberflächen aufweisen als die katalytisch aktiven zweiten Kanäle $5_{II}$ des zweiten Längsabschnitts 9.

Der Reaktor 1 dient zu Erzeugung eines Wasserstoff enthaltenden Synthesegases, wenn der Reaktor 1 von einem fetten Brennstoff-Oxidator-Gemisch durchströmt wird. Erreicht wird dies durch eine unvollständige Oxidation bzw. Teiloxidation des Brennstoffs im Gemisch. Durch die erhöhte katalytische Aktivität aufgrund des größeren katalytisch aktiven Oberflächenanteils kann im ersten Längsabschnitt 8 das einströmende Brennstoff-Oxidator-Gemisch bei entsprechenden Randbedingungen selbsttätig entzündet werden, um die erwünschte katalytische Reaktion zu starten. Der nachfolgende zweite Längsabschnitt 9 ist aufgrund des reduzierten katalytisch aktiven Oberflächenanteils auf eine optimale Wasserstoff-Synthese ausgelegt, wobei gleichzeitig eine überhöhte Wärmeentwicklung vermieden werden soll. Da es im ersten Längsabschnitt 8 primär auf die Initiierung und Stabilisierung der Katalysatorreaktion ankommt, kann es im ersten Längsabschnitt 8 durchaus auch zu vollständigen Oxidationen des Brennstoffs kommen. Jedoch überwiegt in beiden Längsabschnitten 8, 9 der Anteil von Teiloxidationen zur Erzeugung des Wasserstoffs.

Entsprechend den Fig. 2 bis 5 sind Kanäle 5, die parallel zur Längsrichtung 3 verlaufen und quer zur Längsrichtung 3 zueinander benachbart sind, durch gemeinsame Wände 11 voneinander getrennt. Diese Wände 11 besitzen Oberflächen 12, die den Kanälen 5 bzw. der darin strömenden Gasströmung ausgesetzt sind. Zur Realisierung der katalytischen Aktivität der einzelnen Kanäle 5 ist es bei einer bevorzugten Bauweise des Reaktors 1 vorgesehen, die Oberflächen 12 der Kanäle 5 mit einer katalytisch aktiven Beschichtung 13 zu versehen. Um die unterschiedlichen katalytischen Aktivitäten der einzelnen Kanäle $5_I$ und $5_{II}$ in den verschiedenen Längsabschnitten 8, 9 zu realisieren, ist der katalytisch aktiv beschichtete Oberflächenanteil, also die katalytisch aktiv beschichtete Oberfläche bezogen auf die Gesamtoberfläche, in den ersten Kanälen $5_I$ größer als in den zweiten Kanälen $5_{II}$. Durch diese Bauweise kann die bei der katalytischen Reaktion entstehende Wärme relativ schlecht dissipieren, so dass sich im ersten Längsabschnitt 8 die Temperatur des Reaktors 1 rasch erhöht. Dies unterstützt die Produktion des Synthesegases. Im Unterschied dazu existieren im zweiten Längsabschnitt 9 mehr unbeschichtete Oberflächen 12, wodurch mehr Wärme an die Gasströmung abgegeben und abtransportiert werden kann. Insoweit ergibt sich im zweiten Längsabschnitt 9 eine Kühlung, die ein Überhitzen des jeweiligen Werkstoffs des Reaktors 1 verhindert. Dennoch ist der katalytisch aktive Oberflächenanteil in den zweiten Kanälen $5_{II}$ so auf die Länge oder Verweildauer abgestimmt, dass ein Durchbruch des Oxidators, insbesondere $O_2$, minimiert und die Produktion des Synthesegases maximiert wird.

Bei den Ausführungsformen der Fig. 2 bis 4 sind die Wände 11 bei den ersten Kanälen $5_I$ jeweils zweiseitig katalytisch aktiv ausgebildet bzw. jeweils zweiseitig mit der katalytisch aktiven Beschichtung 13 versehen. Im Unterschied dazu sind die Wände 11 bei den zweiten Kanälen $5_{II}$ jeweils nur einseitig katalytisch aktiv ausgestaltet bzw. jeweils nur einseitig mit der katalytisch aktiven Beschichtung 13 versehen. Auf diese Weise wird erreicht, dass in den zweiten Kanälen $5_{II}$ nur an einer Wandseite durch die katalytische Reaktion Wärme erzeugt wird, während diese Wärme an der abgewandten, unbeschichteten bzw. katalytisch inaktiven Wandseite an die Gasströmung abgegeben werden kann.

Durch die verminderte Reaktivität im zweiten Längsabschnitt 9 kann insgesamt die Erhitzung des Reaktors auf Werte reduziert werden, die eine relativ hohe Standzeit für den Reaktor 1 ermöglichen.

Während bei der in den Fig. 2 und 4 gezeigten Ausführungsform im ersten Längsabschnitt 8 sämtliche Oberflächen 12 der ersten Kanäle $5_I$ katalytisch aktiv sind, zeigt Fig. 5 eine Variante bei welcher auch unbeschichtete bzw. katalytisch inaktive Oberflächen 12 vorgesehen sind. Zweckmäßig können sich dabei aktive und katalytisch inaktive Oberflächen 12 innerhalb einzelner erster Kanäle $5_I$ in Längsrichtung 3 abwechseln, während sich katalytisch aktive und katalytisch inaktive Bereiche bei benachbarten ersten Kanälen $5_I$ quer zur Längsrichtung 3 abwechseln. Grundsätzlich sind jedoch auch andere Beschichtungskonfigurationen für den ersten Längsabschnitt 8 und für den zweiten Längsabschnitt 9 möglich. Ziel ist es in jedem Fall, eine möglichst hohe Verbrauchsrate für den jeweiligen Oxidator, vorzugsweise Sauerstoff, zu erreichen, so dass an der Austrittsseite 7 des Reaktors 1 ein Synthesegas austritt, das einen vergleichsweise geringen Restsauerstoffanteil enthält.

Wie besonders deutlich aus den Fig. 2 und 3 hervorgeht, kann der Reaktor 1 bzw. können seine Längsabschnitte 8 und 9 vorzugsweise dadurch hergestellt werden, dass gewellte oder zick-zack-förmig gefaltete erste Bahnmaterialien 36 und ebene zweite Bahnmaterialien 37 in Normalenrichtung aufeinander gestapelt oder geschichtet werden. Dabei ist es grundsätzlich möglich, die einzelnen Bahnmaterialien 36, 37 durch Umfalten aufeinander zu schichten oder alternativ durch Aufwickeln um die Längsmittelachse des Reaktors 1 aufeinander aufzuwickeln. Zweckmäßig können die einzelnen Bahnen 36, 37 auch auf einen zentralen Kern des Reaktors 1 aufgewickelt werden. Die Bahnmaterialien 36, 37 sind vor dem Schichten oder Stapeln oder Wickeln bereits mit der katalytisch aktiven Beschichtung 13 an den entsprechenden Bereichen oder Zonen versehen.

Grundsätzlich können die ersten Kanäle $5_I$ und die zweiten Kanäle $5_{II}$ hinsichtlich ihrer Geometrie identisch ausgestaltet sein. Ebenso können die Kanäle 5 die gleichen hydraulischen Durchmesser besitzen. Bevorzugt wird jedoch eine Ausführungsform, bei der die hydraulischen Durchmesser der ersten Kanäle $5_I$ größer sind als die hydraulischen Durchmesser der zweiten Kanäle $5_{II}$. Beispielsweise ist der hydraulische Durchmesser eines ersten Kanals $5_I$ etwa doppelt so groß wie der hydraulische Durchmesser eines zweiten Kanals $5_{II}$. Durch die größeren hydraulischen Durchmesser im ersten Längsabschnitt 8 kann die Wärmeabstrahlung an der Eintrittsseite 6 verbessert werden. Dies ist von besonderer Bedeutung, da sich an der Eintrittsseite der Reaktor 1 durch die Selbstzündung am stärksten erhitzt. Durch die Vergrößerung der hydraulischen Durchmesser der ersten Kanäle $5_I$ im ersten Längsabschnitt 8 wird außerdem die Selbstentzündungstemperatur des Reaktors 1 reduziert. Gleichzeitig kann durch diese Maßnahme auch der Druckverlust im ersten Längsabschnitt 8 reduziert werden.

Der "hydraulische Durchmesser" $h_d$ wird beispielsweise wie folgt berechnet:

$$ h_d = \frac{4\,x\,Querschnittfläche}{Umfang} $$

Der hydraulische Durchmesser stellt somit eine eindimensionale Vergleichsgröße für beliebige Querschnittsgeometrien dar.

Die axiale Länge der Kanäle 5 kann nun in Abhängigkeit ihrer hydraulischen Durchmesser festgelegt werden. Vorteilhaft ist eine axiale Länge der ersten Kanäle $5_I$, also eine axiale Länge des ersten Längsabschnitts 8, die etwa 4 bis 25 mal größer ist als der hydraulische Durchmesser eines ersten Kanals $5_I$. Für die axiale Länge der zweite Kanäle $5_{II}$ bzw. des zweiten Längsabschnitts 9 hat sich ein Wert bewährt, der etwa 25 bis 100 mal größer ist als der hydraulische Durchmesser eines der zweiten Kanäle $5_{II}$.

Bei der in den Fig. 1, 4 und 5 gezeigten Ausführungsform schließt der zweite Längsabschnitt 9 unmittelbar und somit lückenlos an den ersten Längsabschnitt 8 an. Grundsätzlich sind auch Ausführungsformen möglich, bei denen die beiden Längsabschnitte 8, 9 in axialer Richtung voneinander beabstandet sind, wobei ein derartiger axialer Abstand zweckmäßig kleiner als das 5-fache des hydraulischen Durchmessers eines der ersten Kanäle $5_I$ bzw. eines der zweiten Kanäle $5_{II}$ sein sollte. Ein größerer Abstand könnte zu unerwünschten Wechselwirkungen führen. Durch die hohen Konzentrationen von Wasserstoff und Synthesegas sowie von Restsauerstoff und Brennstoff im Reaktor 1 könnte im Bereich eines mit einem Axialabstand versehenen Übergangs zwischen den Längsabschnitten 8, 9 bei einem zu großen Volumen eine homogene Verbrennungsreaktion entzündet werden, was nicht erwünscht ist.

Sofern im ersten Längsabschnitt 8 nicht sämtliche Oberflächen 12 katalytisch aktiv ausgestaltet sind, kann das zugeführte Brennstoff-Oxidator-Gemisch auch bei Mischungsverhältnissen, die sich einem stöchiometrischen Mischungsverhältnis annähern, heterogen verbrannt werden, ohne dass dabei allzu hohe Oberflächentemperaturen entstehen. Aufgrund mangelhafter Durchmischung kann es auch in einem an sich fetten Brennstoff-Oxidator-Gemisch lokal zu abweichenden Brennstoff-Oxidator-Zahlen kommen. Durch den verringerten katalytisch aktiven Oberflächenanteil kann der Reaktor 1 derartige, unzureichend vermischte Gemische besser verarbeiten, da lokale Temperaturspitzen besser an benachbarte Kanäle 5 abgeleitet werden können. Der Reaktor 1 wird somit vergleichsweise unsensibel gegenüber einer schlechten Vermischung im Brennstoff-Oxidator-Gemisch.

Entsprechend Fig. 6 kann der Reaktor 1 bei einer bevorzugten Ausführungsform einen Ringbereich 14 aufweisen, der sich ebenfalls koaxial zur Längsmittelachse des Reaktors 1 erstreckt und dabei den Kernbereich 10 koaxial umschließt. Auch der Ringbereich 14 ist mit einer Vielzahl paralleler Kanäle 5 ausgestattet, die jedoch im Unterschied zu den Kanälen 5 des Kernbereichs 10 alle katalytisch inaktiv sind. Im Betrieb des Reaktors 1 werden sowohl die Kanäle 5 des Kernbereichs 10 als auch die Kanäle 5 des Ringbereichs 14 vom jeweiligen Brennstoff-Oxidator-Gemisch durchströmt. Während im Kernbereich 10 die gewünschte Wasserstoffsynthese in Verbindung mit einer Erhitzung des Reaktors 1 abläuft, findet in den Kanälen 5 des Ringbereichs 14 keine katalytische Reaktion statt. Somit dient der Ringbereich 14 zum einen zur Kühlung des Reaktors 1. Zum andern verhindert der Ringbereich 14 eine Überhitzung einer Lanze 15, in die der Reaktor 1 entsprechend Fig. 6 eingesetzt sein kann.

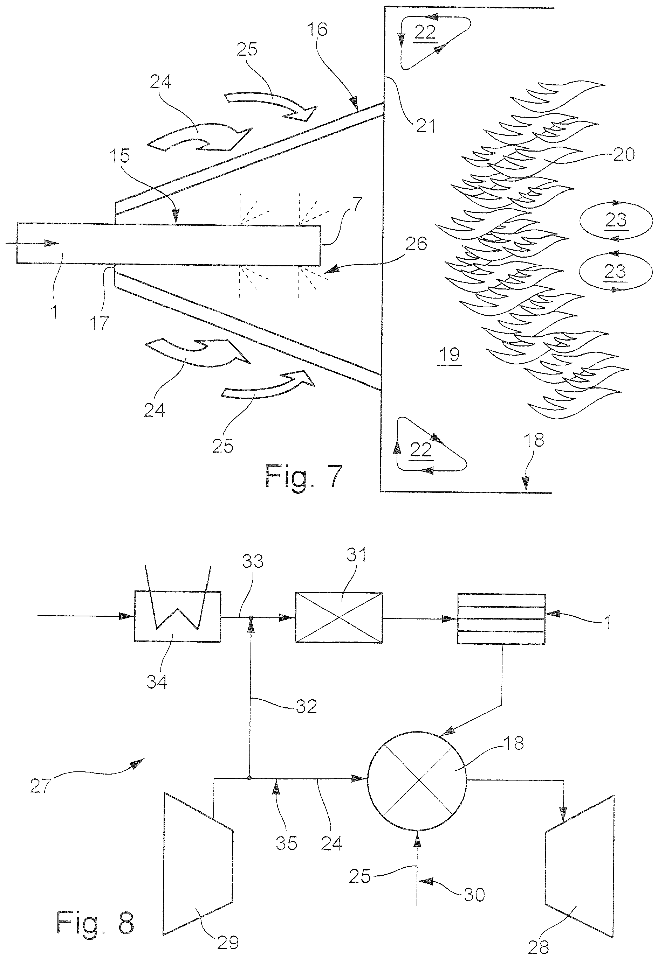

Fig. 7 zeigt eine bevorzugte Anwendungsform des Reaktors 1, bei welcher der Reaktor 1 in die Lanze 15 eines Vormischbrenners 16 eingebaut ist. Der Vormischbrenner 16 besitzt einen Kopf 17, in welchem die Lanze 15 konzentrisch angeordnet ist und von dem aus die Lanze 15 in den Vormischbrenner 16 zentrisch hineinragt. Der Vormischbrenner 16 ist ausgangsseitig beispielsweise an eine Brennkammer 18 angeschlossen, in deren Brennraum 19 eine homogene Verbrennungsreaktion stattfinden soll. Hierzu wird im Brennraum 19 eine Flammenfront 20 erzeugt, die relativ stabil im Brennraum 9 positioniert werden soll. Durch einen Querschnittssprung 21 am Übergang zwischen Vormischbrenner 16 und Brennraum 19 sowie durch eine Drallbeaufschlagung der aus dem Vormischbrenner 16 austretenden Strömung können im Brennraum 19 Rezirkulationszonen 22 und 23 erzeugt werden, die zur Verankerung der Flammenfront 20 beitragen. Eine derartige Lanze 15 kann bei konventionellen Brennkammern 18 bei niedrigen Lasten dazu verwendet werden, die Flammenfront 20 zu stabilisieren. Ebenso kann die Lanze 15 bei größeren Lasten zur Reduzierung von Druckpulsationen verwendet werden, um akustischen Instabilitäten entgegen zu wirken. Hierzu erzeugt die Lanze 15 in einem herkömmlichen Betrieb eine Diffusionsflamme, die vergleichsweise hohe $NO_x$-Emissionen hervorruft. Wenn nun entsprechend der Erfindung der Reaktor 1 in die Lanze 15 eingesetzt ist, kann mit Hilfe der Lanze 15 das wasserstoffhaltige Synthesegas in den Vormischbrenner 16 und somit in den Brennraum 19 eingeleitet werden. Die Einleitung des Synthesegases in den Brennraum 19 führt zu einer Absenkung der Löschgrenze für die Flammenfront 20 sowie zu einer Erhöhung der Reaktionstemperaturen, ohne dass dabei die Erzeugung von $NO_x$ zunimmt. Insgesamt ergibt sich dadurch eine chemische und eine thermische Stabilisierung der Flammenfront 20.

Dem Vormischbrenner 16 wird entsprechend Pfeilen 24 ein Oxidator-Hauptstrom sowie entsprechend Pfeilen 25 ein Brennstoff-Hauptstrom zugeführt. Das im Reaktor 1 erzeugte Synthesegas kann grundsätzlich an einer beliebigen Stelle aus der Lanze 15 austreten. Vorzugsweise tritt das Synthesegas jedoch am freistehenden Ende (Austrittsseite 7) aus der Lanze 15 aus und kann so besonders einfach z. B. in die zentrale Rezirkulationszone 23 eingeleitet werden. Ebenso ist es möglich, das Synthesegas, das dabei mit unverbranntem Brennstoff-Oxidator-Gemisch vermischt sein kann, radial aus der Lanze 15 austreten zu lassen, was durch einen Pfeil 26 symbolisiert ist.

Entsprechend Fig. 8 kann eine Brenneranordnung 27, die zur Befeuerung einer Gasturbine 28, insbesondere einer Kraftwerksanlage, dient, mit der Brennkammer 18 ausgestattet sein, die ihre heißen Verbrennungsabgase der Turbine 28 zuführt. Die Turbine 28 treibt einen Kompressor 29 an, der den Oxidator-Hauptstrom 24 verdichtet und diesen mittels einer Haupt-Oxidator-Zuführung 35 der Brennkammer 18 bzw. deren Vormischbrenner 16 zuführt. Eine Haupt-Brennstoff-Zuführung 30 versorgt die Brennkammer 18 bzw. deren Vormischbrenner 16 mit Brennstoff. Die hier gezeigte Brenneranordnung 27 ist außerdem mit wenigstens einem erfindungsgemäßen Reaktor 1 ausgestattet, der das darin erzeugte Synthesegas der Brennkammer 18 bzw. deren Vormischbrenner 16 zuführt.

Der Reaktor 1 wird eingangsseitig von einem fetten Brennstoff-Oxidator-Gemisch versorgt, das in einer Mischeinrichtung 31 gebildet wird. Der Mischeinrichtung 31 wird über eine Zusatz-Oxidator-Zuführung 32 ein Oxidator-Strom zugeführt, der zweckmäßig an der Druckseite des Kompressors 29 von der Haupt-Oxidator-Zuführung 35 abgezweigt ist. Des Weiteren wird die Mischeinrichtung 31 mit einem Brennstoff-Strom versorgt, der über eine Zusatz-Brennstoff-Zuführung 33 zugeführt wird. In der Zusatz-Brennstoff-Zuführung ist eine Heizeinrichtung 34 angeordnet, die es ermöglicht, den zugeführten Brennstoff auf eine gewünschte Temperatur zu erwärmen. Zusätzlich oder alternativ kann es vorgesehen sein, den der Mischeinrichtung 31 zugeführten zusätzlichen Oxidator-Strom mit einer entsprechenden Heizeinrichtung vorzuwärmen. Die Heizeinrichtung 34 kann beispielsweise elektrisch betrieben werden oder auf eine andere geeignete Weise.

Im Folgenden wird eine Startprozedur für den Reaktor 1 nach der Erfindung näher erläutert:

Zum Starten des Reaktors 1 wird diesem ein fettes Brennstoff-Oxidator-Gemisch zugeführt, das eine erste Brennstoff-Oxidator-Zahl $\lambda_1$ im Bereich von etwa 0.15 bis 0,25, insbesondere zum Beispiel etwa 0,25, aufweist und eine erste Eintrittstemperatur $T_{E1}$ im Bereich von etwa 300°C bis 450°C, zum Beispiel etwa 350°C, besitzt. Bei diesen Startwerten kann im ersten Längsabschnitt 8 die Selbstentzündung des zugeführten Gemisches erreicht werden. Durch die katalytische Reaktion im Reaktor 1 steigt dessen Temperatur stark an. Mittels entsprechender Maßnahmen kann beispielsweise eine Austrittstemperatur $T_A$ an der Austrittsseite 7 des Reaktors 1 überwacht werden. Sobald die Austrittstemperatur $T_A$ einen vorbestimmten Wert im Bereich von etwa 600°C bis 950°C, zum Beispiel etwa 850°C erreicht, erfolgt insbesondere zuerst eine Absenkung der Eintrittstemperatur $T_E$ und insbesondere anschließend eine Erhöhung der Brennstoff-Oxidator-Zahl $\lambda$. Zweckmäßig erfolgt das Erhöhen der Brennstoff-Oxidator-Zahl $\lambda$ und/oder das Absenken der Eintrittstemperatur $T_E$ kontinuierlich bzw. so, dass die Austrittstemperatur $T_A$ im wesentlichen konstant bleibt. Auf diese Weise kann im zugeführten Brennstoff-Oxidator-Gemisch eine zweite Brennstoff-Oxidator-Zahl $\lambda_2$, welche im Bereich von etwa 0,4 bis 0,6 liegt, zum Beispiel etwa 0,4, eingestellt werden. Des Weiteren kann die Eintrittstemperatur $T_E$ auf eine zweite Eintrittstemperatur $T_{E2}$ eingestellt werden, die im Bereich von nur noch etwa 100°C bis 250°C, zum Beispiel etwa 150°C, beträgt. Sobald die gewünschten Werte für die zweite Eintrittstemperatur $T_{E2}$ und die zweite Brennstoff-Oxidatorzahl $\lambda_2$ erreicht sind, ist die Startprozedur des Reaktors 1 abgeschlossen.

Durch die erfindungsgemäß vorgeschlagene Vorgehensweise kann die Oberflächentemperatur des Reaktors 1 hinreichend klein gehalten werden, um eine möglichst große Lebenszeit oder Standzeit für den Reaktor 1 zu erreichen. Gleichzeitig wird durch diese Maßnahme zum einen das Entzünden und Aufheizen des Reaktors 1 verkürzt und zuverlässiger, während zum anderen die Synthesegasproduktion optimiert wird.

Der erfindungsgemäße Reaktor 1 kann trotz seiner kompakten Bauweise bei vergleichsweise großen Volumenströmen arbeiten, z. B. gilt GHSV $\geq 4,5 \times 10^6 \mathrm{hr}^{-1}$, wobei "GHSV" = "gas hourly space velocity".

Die Produktion des Synthesegases sowie die Austrittstemperatur $T_A$ kann vorzugsweise dadurch gesteuert und optimiert werden, dass die Brennstoff-Oxidator-Zahl $\lambda$ und die Einlasstemperatur $T_E$ in geeignetere Weise variiert werden.

Die Steuerung der Eintrittstemperatur $T_E$ kann besonders einfach durch eine entsprechende Regelung der Heizeinrichtung 34 erzielt werden. Für die Veränderung der Brennstoff-Oxidator-Zahl $\lambda$ können zum Beispiel Ventile oder dergleichen in den Zuführungen 30, 35 verwendet werden.

Nachdem die Gasturbine hochgefahren ist, nimmt die Einlasstemperatur $T_E$ schon dadurch zu, dass der Kompressor 29 ein größeres Verdichtungsverhältnis erreicht, so dass die Heizeinrichtung 34 ausgeschaltet werden kann.

Entsprechend einer besonders vorteilhaften Weiterbildung kann der erfindungsgemäße Reaktor 1 innerhalb eines mehrstufigen katalytischen Brenners die erste Stufe bilden, dessen weitere Stufen mit mageren Brennstoff-Oxidator-Gemischen arbeiten. Ein derartiger, mehrstufiger katalytischer Brenner kann somit die Vorteile des wasserstoffhaltigen Synthesegases ebenfalls ausnutzen, um beispielsweise die Löschgrenze bzw. die Selbstentzündungstemperatur abzusenken und die Brennstoffkonversion zu verbessern. Des Weiteren kann der Reaktor 1 sowie der soeben beschriebene mehrstufige katalytische Brenner Bestandteil eines Hybrid-Brenners sein, der sowohl mit katalytischer Verbrennung als auch mit magerer Vormischverbrennung arbeitet.

Des Weiteren kann der erfindungsgemäße Reaktor 1 in einem Hybrid-Brenner, der mit Teiloxidation und mit Volloxidation arbeitet, verwendet werden, wobei der Reaktor 1 dann zur Realisierung der Teiloxidation verwendet werden kann.

Darüber hinaus kann der hier gezeigte Reaktor 1 auch dazu verwendet werden, andere Verbrennungssysteme zu stabilisieren. Beispielsweise eine sekundäre Nachverbrennung oder auch eine flammenlose Verbrennung. Sobald die Sekundärverbrennung oder die flammenlose Verbrennung mit Methan ($CH_4$) oder Erdgas arbeiten, sind diese sehr empfindlich im Hinblick auf Störungen des Drucks, des Strömungsfelds, der Temperatur und des Brennstoff-Oxidator-Mischungsverhältnisses. Diese Empfindlichkeit kann zu einem instabilen Betrieb und insbesondere zu thermoakustischen Problemen derartiger Anlagen führen. Solche Störungen können jedoch durch einen relativ geringen Anteil an Wasserstoff vermieden werden. Dementsprechend ermöglicht es die vorliegende Erfindung, für derartige Anwendungen die benötigte Menge an wasserstoffhaltigem Synthesegas zu erzeugen, um auch hier die Verbrennungsreaktion zu stabilisieren bzw. zu verbessern.

Üblicherweise sind einer Brennkammer mehrere Brenner zugeordnet. Um Instabilitäten zu vermeiden, ist es wünschenswert, die Flammencharakteristik der einzelnen Brenner nur leicht von Brenner zu Brenner zu variierten. Dies ist in der Regel nicht möglich, da hierzu ein sehr komplexes Brennstoffverteilungssystem erforderlich ist. Sofern jedem Brenner ein Reaktor 1 vorgeschaltet bzw. zugeordnet wird, kann mit Hilfe des erfindungsgemäßen Reaktors 1 durch eine entsprechende Steuerung der Synthesegasproduktion und der Austrittstemperaturen die Flammencharakteristik jedes einzelnen Brenners gezielt und feinstufig oder stufenlos beeinflusst werden. Beispielsweise ist es auch möglich, die Länge der verwendeten Reaktoren 1 in den einzelnen Brennern zu variieren.

Eine weitere Ausführungsvariante sieht die Injektion von Dampf stromaufwärts des brennstofffreien katalytischen Reaktors vor, um weiteres Synthesegas zu produzieren mit einem Anheben der Wasserstoffproduktion auf Werte oberhalb der Grenzen, die bei standardmäßiger Teiloxidation von brennstofffreichen Gemischen erreichbar sind durch

a) Wasser-Gas Verschiebung bei niedrigeren Betriebstemperaturen und
b) Dampf, welcher das nichtreagierte Erdgas bei höheren Temperaturen nachformiert.

In diesen Fällen kann ein größerer Teil des Oberflächengebietes, beispielsweise > 40%, beschichtet werden, da die hohe spezifische Wärmekapazität des Dampfes einen viel größeren Kühleffekt auf die Oberflächentemperaturen hat.

Bezugszeichenliste

1 Reaktor
2 Reaktorkörper
3 Längsachse
4 Gasströmung
5 Kanal
$5_I$ 1. Kanal
$5_{II}$ 2. Kanal
6 Eintrittsseite
7 Austrittsseite
8 erster Längsabschnitt
9 zweiter Längsabschnitt
10 Kernbereich
11 Wand
12 Oberfläche
13 Beschichtung
14 Ringbereich
15 Lanze
16 Vormischbrenner
17 Kopf
18 Brennkammer
19 Brennraum
20 Flammenfront
21 Querschnittssprung
22 Rezirkulationszone
23 Rezirkulationszone
24 Oxidator-Strömung
25 Brennstoff-Strömung
26 Gemischeindüsung
27 Brenneranordnung
28 Gasturbine
29 Kompressor
30 Haupt-Brennstoff-Zuführung
31 Mischeinrichtung
32 Zusatz-Oxidator-Zuführung
33 Zusatz-Brennstoff-Zuführung
34 Heizeinrichtung
35 Haupt-Oxidator-Zuführung
36 erstes Bahnmaterial
37 zweites Bahnmaterial

**Patentansprüche**

1. Katalytischer Reaktor zur Erzeugung eines Wasserstoff enthaltenden Synthesegases aus einem fetten Brennstoff-Oxidator-Gemisch,

 - mit einer Vielzahl paralleler Kanäle (5), die sich von einer Eintrittsseite (6) zu einer Austrittsseite (7) erstrecken,
 - wobei die katalytische Aktivität der Kanäle (5) durch eine katalytisch aktive Beschichtung (13) an der Gasströmung ausgesetzten Oberflächen (12) der Kanäle (5) gebildet ist,

 **dadurch gekennzeichnet, dass** zumindest in einem Kernbereich (10) eines Querschnitts des Reaktors (1) alle Kanäle (5) katalytisch aktiv ausgestaltet sind, wobei in einem die Eintrittsseite (6) aufweisenden ersten Längsabschnitt (8) des Reaktors (1) die katalytisch aktiven ersten Kanäle ($5_I$) einen größeren katalytisch aktiv beschichteten Oberflächenanteil aufweisen als die katalytisch aktiven zweiten Kanäle ($5_{II}$) in einem die Austrittsseite (7) aufweisenden und an den ersten Längsabschnitt (8) angrenzenden zweiten Längsabschnitt (9) des Reaktors (1).

2. Reaktor nach Anspruch 1,
 **dadurch gekennzeichnet,**
 **dass** die Oberflächen (12) der ersten Kanäle ($5_I$) vollständig katalytisch aktiv beschichtet sind, während die Oberflächen (12) der zweiten Kanäle ($5_{II}$) nur teilweise katalytisch aktiv beschichtet sind.

3. Reaktor nach Anspruch 1 oder 2,
 **dadurch gekennzeichnet,**

 - **dass** quer zur Längsrichtung (3) benachbarte Kanäle ($5_I$, $5_{II}$) durch gemeinsame Wände (11) voneinander getrennt sind und
 - **dass** die Wände (11) in den ersten Kanälen ($5_I$) zweiseitig katalytisch aktiv ausgebildet sind und/oder
 - **dass** die Wände (11) in den zweiten Kanälen ($5_{II}$) einseitig katalytisch aktiv ausgebildet sind.

4. Reaktor nach einem der Ansprüche 1 bis 3,
 **dadurch gekennzeichnet,**
 **dass** der hydraulische Durchmesser der ersten Kanäle ($5_I$) größer, insbesondere zweimal größer, ist als der hydraulische Durchmesser der zweiten Kanäle ($5_{II}$).

5. Reaktor nach einem der Ansprüche 1 bis 4,
 **dadurch gekennzeichnet,**

 - **dass** die axiale Länge der ersten Kanäle ($5_I$) zwischen vier und fünfundzwanzigmal größer ist als der hydraulische Durchmesser eines der ersten Kanäle ($5_I$) und/oder
 - die axiale Länge der zweiten Kanäle ($5_{II}$) zwischen fünfundzwanzig und einhundertmal größer ist als der hydraulische Durchmesser eines der zweiten Kanäle ($5_{II}$).

6. Reaktor nach einem der Ansprüche 1 bis 5,

**dadurch gekennzeichnet,**

- **dass** der zweite Längsabschnitt (9) unmittelbar an den ersten Längsabschnitt (8) anschließt oder
- **dass** der zweite Längsabschnitt (9) vom ersten Längsabschnitt (8) axial beabstandet ist, wobei der Abstand kleiner ist als das Fünffache des hydraulischen Durchmessers eines der ersten Kanäle ($5_I$) oder eines der zweiten Kanäle ($5_{II}$).

7. Reaktor nach einem der Ansprüche 1 bis 6,
**dadurch gekennzeichnet,**
**dass** der Reaktor (1) einen Ringbereich (14) aufweist, der den Kernbereich (10) koaxial umschließt und dessen Kanäle (5) im ersten Längsabschnitt (8) und im zweiten Längsabschnitt (9) alle katalytisch inaktiv sind.

8. Reaktor nach einem der Ansprüche 1 bis 7,
**dadurch gekennzeichnet,**
**dass** der Reaktor (1) in eine Lanze (15) eingebaut ist, die in einem Kopf (17) eines Vormischbrenners (16) konzentrisch angeordnet ist und in den Vormischbrenner (16) hineinragt.

9. Brenneranordnung, insbesondere für eine Gasturbine (28) einer Kraftwerksanlage,

- mit einer Brennkammer (18),
- mit einer an die Brennkammer (18) angeschlossenen Haupt-Brennstoff-Zuführung (30),
- mit einer an die Brennkammer (18) angeschlossenen Haupt-Oxidator-Zuführung (35),

**dadurch gekennzeichnet, dass**

- wenigstens ein katalytischer Reaktor (1) nach einem der Ansprüche 1 bis 8 ausgangsseitig an die Brennkammer (18) angeschlossen ist,
- mit einer an den Reaktor (1) angeschlossenen Zusatz-Brennstoff-Zuführung (33),
- mit einer an den Reaktor (1) angeschlossenen Zusatz-Oxidator-Zuführung (32),
- mit einer Heizeinrichtung (34) zum Vorwärmen des Brennstoff und/oder des Oxidators stromauf des Reaktors.

10. Verfahren zum Betreiben eines katalytischen Reaktors (1) nach einem der Ansprüche 1 bis 8,

- bei dem zum Starten des Reaktors (1) ein fettes Brennstoff-Oxidator-Gemisch mit einer ersten Brennstoff-Oxidator-Zahl ($\lambda_1$) und bei einer ersten Eintrittstemperatur ($T_{E1}$) zugeführt wird,

**dadurch gekennzeichnet, dass**

- dem nach dem Starten des Reaktors (1) die Eintrittstemperatur ($T_E$) auf eine zweite Eintrittstemperatur ($T_{E2}$) abgesenkt wird und danach im zugeführten Brennstoff-Oxidator-Gemisch die Brennstoff-Oxidator- Zahl ($\lambda$) auf eine zweite Brennstoff-Oxidator-Zahl ($\lambda_2$) erhöht wird.

11. Verfahren nach Anspruch 10,
**dadurch gekennzeichnet,**
**dass** das Erhöhen der Brennstoff-Oxidator-Zahl ($\lambda$) und/oder das Absenken der Eintrittstemperatur ($T_E$) kontinuierlich erfolgt/erfolgen.

12. Verfahren nach Anspruch 10 oder 11,
**dadurch gekennzeichnet,**
**dass** das Erhöhen der Brennstoff-Oxidator-Zahl ($\lambda$) und/oder das Absenken der Eintrittstemperatur ($T_E$) so durchgeführt wird/werden, dass eine Austrittstemperatur ($T_A$) des Reaktors (1) im wesentlichen konstant bleibt.

13. Verfahren nach einem der Ansprüche 10 bis 12,
**dadurch gekennzeichnet,**
**dass** das Erhöhen der Brennstoff-Oxidator-Zahl ($\lambda$) und/oder das Absenken der Eintrittstemperatur ($T_E$) beginnt, sobald eine Austrittstemperatur ($T_A$) des Reaktors (1) einen vorbestimmten Wert erreicht.

14. Verfahren nach einem der Ansprüche 10 bis 13,
**dadurch gekennzeichnet,**

- **dass** die erste Brennstoif-Oxidator-Zahl ($\lambda_1$) etwa 0,15 bis 0,25 beträgt und/oder
- **dass** die zweite Brennstoff-Oxidator-Zahl ($\lambda_2$) etwa 0,4 bis 0,6 beträgt und/oder
- **dass** die ersten Eintrittstemperatur ($T_{E1}$) etwa 300°C bis 450°C beträgt und/oder
- **dass** die zweite Eintrittstemperatur ($T_{E2}$) etwa 100°C bis 250°C beträgt und/oder
- **dass** die Austrittstemperatur ($T_A$) etwa 600° bis 950°C beträgt.

**Claims**

1. Catalytic reactor for producing a synthetic gas containing hydrogen from a rich fuel-oxidator mixture,

- with a plurality of parallel channels (5) extending from an inlet side (6) to an outlet side (7),
- wherein the catalytic activity of the channels (5) is formed by a catalytically active coating (13) on the surfaces (12) of the channels (5) exposed to the gas flow,

**characterised in that** at least in a core region (10) of a cross-section of the reactor (1), all channels (5) are configured catalytically active,

wherein the catalytically active first channels ($5_I$) in a first longitudinal section (8) of the reactor (1) containing the inlet side (6) have a larger proportion of catalytically actively coated surface than the catalytically active second channels ($5_{II}$) in a second longitudinal portion (9) of the reactor (1) containing the outlet side (7) and adjacent to the first longitudinal portion (8).

2. Reactor according to claim 1, **characterised in that** the surfaces (12) of the first channels ($5_I$) are completely catalytically actively coated, whereas the surfaces (12) of the second channels ($5_{II}$) are only partially catalytically actively coated.

3. Reactor according to claim 1 or 2, **characterised in that**

   - channels ($5_I$, $5_{II}$) adjacent to each other transversely to the longitudinal direction (3) are separated from each other by common walls (11), and
   - the walls (11) in the first channels ($5_I$) are formed catalytically active on two sides, and/or
   - the walls (11) in the second channels ($5_{II}$) are formed catalytically active on one side.

4. Reactor according to one of claims 1 to 3, **characterised in that** the hydraulic diameter of the first channels ($5_I$) is greater than, in particular twice as great as the hydraulic diameter of the second channels ($5_{II}$).

5. Reactor according to any of claims 1 to 4, **characterised in that**

   - the axial length of the first channels ($5_I$) is between four and twenty-five times greater than the hydraulic diameter of one of the first channels ($5_I$), and/or
   - the axial length of the second channels ($5_{II}$) is between twenty-five and one hundred times greater than the hydraulic diameter of one of the second channels ($5_{II}$).

6. Reactor according to any of claims 1 to 5, **characterised in that**

   - the second longitudinal portion (9) connects directly to the first longitudinal portion (8), or
   - the second longitudinal portion (9) is spaced axially from the first longitudinal portion (8), wherein the spacing is smaller than five times the hydraulic diameter of one of the first channels ($5_I$) or one of the second channels ($5_{II}$).

7. Reactor according to any of claims 1 to 6, **characterised in that** the reactor (1) has an annular region (14) which surrounds the core region (10) coaxially and the channels of which (5) in the first longitudinal portion (8) and in the second longitudinal portion (9) are all catalytically inactive.

8. Reactor according to any of claims 1 to 7, **characterised in that** the reactor (1) is integrated in a lance (15) which is arranged concentrically in a head (17) of a premix burner (16) and protrudes into the premix burner (16).

9. Burner arrangement, in particular for a gas turbine (28) of a power plant,

   - with a combustion chamber (18),
   - with a main fuel supply (30) connected to the combustion chamber (18),
   - with a main oxidator supply (35) connected to the combustion chamber (18),

   **characterised in that**

   - at least one catalytic reactor (1) according to any of claims 1 to 8 is connected to the combustion chamber (18) on the outlet side,
   - with an additional fuel supply (33) connected to the reactor (1),
   - with an additional oxidator supply (32) connected to the reactor (1),
   - with a heating device (34) for preheating the fuel and/or oxidator upstream of the reactor.

10. Method for operating a catalytic reactor (1) according to any of claims 1 to 8,

    - in which on start-up of the reactor (1), a rich fuel-oxidator mixture is supplied with a first fuel-oxidator count ($\lambda_1$) and a first inlet temperature ($T_{E1}$),

    **characterised in that**

    - after start-up of the reactor (1), the inlet temperature ($T_E$) is reduced to a second inlet temperature ($T_{E2}$) and thereafter the fuel-oxidator count ($\lambda$) in the supplied fuel-oxidator mixture is increased to a second fuel oxidator count ($\lambda_2$).

11. Method according to claim 10, **characterised in that** the fuel-oxidator count ($\lambda$) is increased and/or the inlet temperature ($T_E$) reduced continuously.

12. Method according to claim 10 or 11, **characterised in that** the fuel-oxidator count ($\lambda$) is increased and/or the inlet temperature ($T_E$) reduced such that an outlet temperature ($T_A$) of the reactor (1) remains substantially constant.

**13.** Method according to any of claims 10 to 12, **characterised in that** the increase of the fuel-oxidator count ($\lambda$) and/or the reduction of the inlet temperature ($T_E$) begins as soon as an outlet temperature ($T_A$) of the reactor (1) reaches a predefined value.

**14.** Method according to any of claims 10 to 13, **characterised in that**

- the first fuel oxidator count ($\lambda_1$) is around 0.15 to 0.25, and/or
- the second fuel oxidator count ($\lambda_2$) is around 0.4 to 0.6, and/or
- the first inlet temperature ($T_{E1}$) is around 300o to 450°C, and/or
- the second inlet temperature ($T_{E2}$) is around 100o to 250°C, and/or
- the outlet temperature ($T_A$) is around 600o to 950°C.

**Revendications**

**1.** Réacteur catalytique pour la production d'un gaz de synthèse contenant de l'hydrogène à partir d'un mélange carburant-oxydant riche,

- avec une pluralité de canaux parallèles (5) qui s'étendent d'un côté d'entrée (6) vers un côté de sortie (7),
- l'activité catalytique des canaux (5) étant formée par un revêtement catalytique actif (13) sur les surfaces (12) des canaux (5) exposées à l'écoulement de gaz,

**caractérisé en ce que**, au moins dans une zone centrale (10) d'une section du réacteur (1), tous les canaux (5) sont conçus de manière active catalytiquement, moyennant quoi dans une première portion longitudinale (8) du réacteur (1), comprenant le côté d'entrée (6), les premiers canaux actifs catalytiquement (5$_I$) comprennent une part de surface revêtue de manière active catalytiquement supérieure à celle des deux canaux actifs catalytiquement (5$_{II}$) dans une deuxième portion longitudinale (9) du réacteur (1), comprenant le côté de sortie (7) et adjacente à la première portion longitudinale (8).

**2.** Réacteur selon la revendication 1, **caractérisé en ce que** les surfaces (12) des premiers canaux (5$_I$) sont revêtus entièrement de manière active catalytiquement, tandis que les surfaces (12) des deuxièmes canaux (5$_{II}$) ne sont que partiellement revêtus de manière active catalytiquement.

**3.** Réacteur selon la revendication 1 ou 2, **caractérisé en ce que**

- transversalement par rapport à la direction longitudinale (3), les canaux (5$_I$, 5$_{II}$) adjacents sont séparés entre eux par des parois communes (11) et
- les parois (11) dans les premiers canaux (5$_I$) sont conçues de manière active catalytiquement des deux côtés et/ou
- les parois (11) dans les deuxièmes canaux (5$_{II}$) sont conçues de manière active catalytiquement d'un seul côté.

**4.** Réacteur selon l'une des revendications 1 à 3, **caractérisé en ce que** le diamètre hydraulique des premiers canaux (5$_I$) est supérieur, plus particulièrement deux fois plus important que le diamètre hydraulique des deuxièmes canaux (5$_{II}$).

**5.** Réacteur selon l'une des revendications 1 à 4, **caractérisé en ce que**

- la longueur axiale des premiers canaux (5$_I$) est entre quatre et vingt-cinq fois plus importante que le diamètre hydraulique d'un des premiers canaux (5$_I$) et/ou
- la longueur axiale des deuxièmes canaux (5$_{II}$) est entre vingt-cinq et cent fois plus importante que le diamètre hydraulique d'un des deuxièmes canaux (5$_{II}$).

**6.** Réacteur selon l'une des revendications 1 à 5, **caractérisé en ce que**

- la deuxième portion longitudinale (9) prolonge directement la première portion longitudinale (8) ou
- la deuxième portion longitudinale (9) est éloignée axialement de la première portion longitudinale (8), la distance étant inférieure au quintuple du diamètre hydraulique d'un des premiers canaux (5$_I$) ou d'un des deuxièmes canaux (5$_{II}$).

**7.** Réacteur selon l'une des revendications 1 à 6, **caractérisé en ce que** le réacteur (1) comprend une zone annulaire (14), qui entoure de manière coaxiale la zone centrale (10) et dont les canaux (5) sont tous inactifs catalytiquement dans la premier portion longitudinale (8) et dans la deuxième portion longitudinale (9).

**8.** Réacteur selon l'une des revendications 1 à 7, **caractérisé en ce que** le réacteur (1) est monté dans une lance (15) qui est disposé de manière concentrique dans une tête (17) d'un brûleur de pré-mélange (16) et qui dépasse dans le brûleur de pré-mélange (16).

**9.** Dispositif de brûleur, plus particulièrement pour une turbine à gaz (28) d'une centrale électrique,

- avec une chambre de combustion (18),
- avec une alimentation principale en carburant (30) raccordée à la chambre de combustion (18),
- avec une alimentation principale en oxydant (35) raccordée à la chambre de combustion (18),

**caractérisé en ce que**

- au moins un réacteur catalytique (1) selon l'une des revendications 1 à 8 est raccordé du côté de la sortie à la chambre de combustion (18),
- avec une alimentation supplémentaire en carburant (33) raccordée au réacteur (1),
- avec une alimentation supplémentaire en oxydant (32) raccordée au réacteur (1),
- avec un dispositif de chauffage (34) pour le pré-chauffage du carburant et/ou de l'oxydant en amont du réacteur.

10. Procédé d'exploitation d'un réacteur catalytique (1) selon l'une des revendications 1 à 8,

- dans lequel, pour le démarrage du réacteur (1), un mélange carburant-oxydant riche est introduit avec un premier indice carburant-oxydant ($\lambda_1$) et avec une première température d'entrée ($T_{E1}$),

**caractérisé en ce que**

- après le démarrage du réacteur (1), la température d'entrée ($T_E$) est diminuée à une deuxième température d'entrée ($T_{E2}$) puis, dans le mélange carburant-oxydant introduit, l'indice carburant-oxydant ($\lambda$) est augmentée à un deuxième indice carburant-oxydant ($\lambda_2$).

11. Procédé selon la revendication 10,
**caractérisé en ce que**
l'augmentation de l'indice carburant-oxydant ($\lambda$) et/ou la diminution de la température d'entrée ($T_E$) ont lieu de manière continue.

12. Procédé selon la revendication 10 ou 11,
**caractérisé en ce que**
l'augmentation de l'indice carburant-oxydant ($\lambda$) et/ou la diminution de la température d'entrée ($T_E$) sont réalisées de façon à ce qu'une température de sortie ($T_A$) du réacteur (1) reste globalement constante.

13. Procédé selon l'une des revendications 10 à 12,
**caractérisé en ce que**
l'augmentation de l'indice carburant-oxydant ($\lambda$) et/ou la diminution de la température d'entrée ($T_E$) commencent dès qu'une température de sortie ($T_A$) du réacteur (1) atteint une valeur prédéterminée.

14. Procédé selon l'une des revendications 10 à 13,
**caractérisé en ce que**

- le premier indice carburant-oxydant ($\lambda_1$) est d'environ 0,15 à 0,25 et/ou
- le deuxième indice carburant-oxydant ($\lambda_2$) est d'environ 0,4 à 0,6 et/ou
- la première température d'entrée ($T_{E1}$) est d'environ 300 °C à 450 °C et/ou
- la deuxième température d'entrée ($T_{E2}$) est d'environ 100°C à 250 °C et/ou
- la température de sortie ($T_A$) est d'environ 600 °C à 950 °C.

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1265029 A2
- US 5346389 A
- US 6358040 B1
- EP 0767345 A1
- EP 1251314 A
- EP 1255078 A